# EUROPEAN PATENT APPLICATION

(11) **EP 4 768 224 A1**
(43) Date of publication of application: **01.07.2026**
(21) Application number: 25226238.1
(22) Date of filing: 22.12.2025
(51) Int. Cl.: B29C 45/76

(54) **INJECTION MOLDING MANAGEMENT SYSTEM**

(30) Priority: 24.12.2024 JP 2024227100
(71) Applicant: Seiko Epson Corporation, Tokyo 160-8801 (JP)
(72) Inventor: TAKIZAWA, Tomohiro, Suwa-shi, 392-8502 (JP); AKASAKA, Tatsuo, Suwa-shi, 392-8502 (JP)
(74) Representative: Lewis Silkin LLP

(57) **Abstract**

A molding management system for managing production of a product performed by an injection molding apparatus includes an information processing device, and the information processing device acquires cycle data from the injection molding apparatus for each cycle of performing injection molding, the cycle data including, for each of N types of actual values controlled by the injection molding apparatus, actual value information indicating a corresponding type of actual value as cycle-related information obtained in response to execution of the cycle by the injection molding apparatus and including first date-and-time information indicating a date and time when the cycle data is acquired from the injection molding apparatus, and in response to a first operation that is received, displays, on a display unit, an change tendency information display image for displaying, for each of one or more pieces of actual value information designated among the N pieces of actual value information included in the cycle data, any one of a plurality of types of change tendency information indicating a change tendency of the actual value indicated by a corresponding piece of the actual value information, and the actual value information in association with each other, N being an integer of two or more.

## Description

The present application is based on, and claims priority from JP Application Serial Number 2024-227100, filed December 24, 2024, the disclosure of which is hereby incorporated by reference herein in its entirety.

### BACKGROUND

### 1. Technical Field

The present disclosure relates to a molding management system.

### 2. Related Art

A technique for managing production of a product in a production process including an injection molding process of the product performed by an injection molding apparatus, has been studied and developed.

Here, a technique for displaying a trend graph for each value of a plurality of types of quantities controlled by an injection molding apparatus is known (see JP-A-2005-343029).

JP-A-2005-343029 is an example of the related art.

Here, in the technique described in JP-A-2005-343029, as the number of types of quantities controlled by the injection molding apparatus increases, the number of trend graphs also increases, and as a result, it may be difficult to quickly read a change tendency of a value of the quantity from the trend graphs.

### SUMMARY

An aspect of the disclosure is a molding management system for managing production of a product in a production process including an injection molding process of the product performed by an injection molding apparatus, the molding management system including: an information processing device communicably connected to a terminal device, in which the information processing device acquires cycle data from the injection molding apparatus for each cycle of performing injection molding, the cycle data including, for each of N types of actual values controlled by the injection molding apparatus, actual value information indicating a corresponding type of actual value as cycle-related information obtained in response to execution of the cycle by the injection molding apparatus and including first date-and-time information indicating a date and time when the cycle data is acquired from the injection molding apparatus, and in response to a first operation that is received, displays, on a display unit, an change tendency information display image for displaying, for each of one or more pieces of actual value information designated among the N pieces of actual value information included in the cycle data, any one of a plurality of types of change tendency information indicating a change tendency of the actual value indicated by a corresponding piece of the actual value information, and the actual value information in association with each other, N being an integer of two or more.

### BRIEF DESCRIPTION OF THE DRAWINGS

FIG. 1 is a diagram showing an example of a configuration of a molding management system 1.
FIG. 2 is a diagram showing an example of an image P1.
FIG. 3 is a diagram illustrating a determination condition for determining a change tendency of each actual value is indicated by which of five types of change tendency information.
FIG. 4 is a diagram showing an example of a state in which detailed information is displayed when a selection operation is performed on an icon I11 displayed in a region R1.
FIG. 5 is a diagram showing an example of a state in which detailed information is displayed when a selection operation is performed on an icon I41 displayed in a region R4.
FIG. 6 is a diagram showing an example of an image P4.
FIG. 7 is a diagram showing an example of the image P4 in which change tendency information is displayed, for each piece of cycle data, in association with actual value information included in a corresponding piece of cycle data.
FIG. 8 is a diagram illustrating a card-type image displayed by the information processing device X for each piece of actual value information in response to a third change tendency display operation.
FIG. 9 is a diagram showing an example of a hardware configuration of an information processing device X.
FIG. 10 is a diagram showing an example of a functional configuration of the information processing device X.
FIG. 11 is a diagram showing an example of a flow of processing performed by the information processing device X in response to a received operation.

### DESCRIPTION OF EMBODIMENTS

### Embodiment

An embodiment of the disclosure will be described below with reference to the drawings.

### Overview of Molding Management System

First, an overview of a molding management system according to the embodiment will be described.

The molding management system according to the embodiment manages production of a product in a production process including an injection molding process of the product performed by an injection molding apparatus. The molding management system includes an information processing device. The information processing device is communicably connected to a terminal device. The information processing device acquires cycle data from the injection molding apparatus for each cycle of performing injection molding, the cycle data including, for each of N types of actual values controlled by the injection molding apparatus, actual value information indicating a corresponding type of actual value as cycle-related information obtained in response to execution of the cycle by the injection molding apparatus and including first date-and-time information indicating a date and time when the cycle data is acquired from the injection molding apparatus. Then, in response to a first operation that is received, the information processing device displays, on a display unit, an change tendency information display image for displaying, for each of one or more pieces of actual value information designated among the N pieces of actual value information included in the cycle data, any one of a plurality of types of change tendency information indicating a change tendency of the actual value indicated by a corresponding piece of the actual value information, and the actual value information in association with each other. Here, n is an integer of 2 or more. Accordingly, the molding management system can make it possible to quickly read the change tendency of the actual value indicated by each piece of actual value information.

In the following description, a configuration of the molding management system according to such an embodiment and processing performed by a server provided in the molding management system will be described in detail. In the present embodiment, when a certain piece of information X1 and another piece of information X2 are different information, a type of the information X1 is treated as different from a type of the information X2. That is, in the present embodiment, a certain piece of data including a plurality of pieces of different information means the data including a plurality of types of information.

### Configuration of Molding Management System

Hereinafter, a configuration of the molding management system according to the embodiment will be described by taking a molding management system 1 as an example.

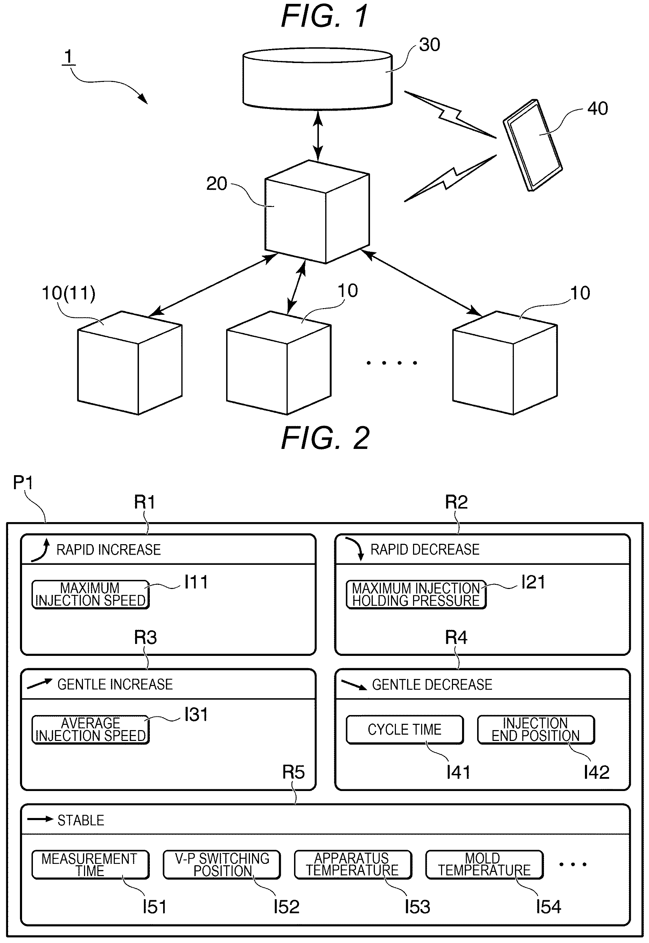

FIG. 1 is a diagram showing an example of a configuration of the molding management system 1.

The molding management system 1 is a type of manufacturing execution system (MES). For example, the molding management system 1 includes one or more managed devices 10, an information processing device 20, and a server 30. The molding management system 1 may not include a part or all of the one or more managed devices 10. The molding management system 1 may include the server 30 without including the information processing device 20. Further, the molding management system 1 may include the information processing device 20 without including the server 30. In the molding management system 1, the information processing device 20 may be configured integrally with the server 30. Hereinafter, as an example, a case in which the molding management system 1 includes a plurality of managed devices 10 as the one or more managed devices 10 will be described. Hereinafter, as an example, a case in which the molding management system 1 includes both the information processing device 20 and the server 30 separate from the information processing device 20 will be described. At least one of the information processing device 20 and the server 30 is an example of the information processing device.

Each of the plurality of managed devices 10 provided in the molding management system 1 is a device managed by the molding management system 1. In FIG. 1, for convenience of description, the plurality of managed devices 10 are indicated by the same reference numeral. However, a part or all of the plurality of managed devices 10 may be devices of types different from one another. The plurality of managed devices 10 include at least one injection molding apparatus that performs injection molding of a product using resin such as plastic. An injection molding apparatus 11 shown in FIG. 1 is an example of such an injection molding apparatus. The plurality of managed devices 10 may include an injection molding apparatus that performs metal injection molding (MIM) of a product. Hereinafter, for convenience of description, injection molding of a product using resin such as plastic is simply referred to as injection molding. Hereinafter, the injection molding apparatus that performs the injection molding of a product using resin such as plastic is simply referred to as an injection molding apparatus. At least one injection molding apparatus in the plurality of managed devices 10 may be a device that performs injection molding using a material other than resin and metal. In addition to the injection molding apparatus, the plurality of managed devices 10 include, for example, peripheral equipment of the injection molding apparatus. Examples of the peripheral equipment of the injection molding apparatus include, but are not limited to, a material supply device, a conveying device, a cleaning device, and a sintering device. Here, the material supply device is a device that supplies a material used for injection molding of a product by the injection molding apparatus to the injection molding apparatus. The cleaning device is a device that conveys a product injection-molded by the injection molding apparatus. The cleaning device is a device that cleans a product injection-molded by the injection molding apparatus. The sintering device is a device that sinters a product after being cleaned by the cleaning device.

The molding management system 1 manages production of a product in a production process including an injection molding process of the product performed by the injection molding apparatus in the plurality of managed devices 10. Here, the injection molding apparatus in the plurality of managed devices 10 may have any configuration as long as the configuration is capable of producing a product by injection molding. Hereinafter, for convenience of description, a process in which the injection molding apparatus performs injection molding of a product once is referred to as a cycle. Hereinafter, for convenience of description, a cavity in a mold attached to the injection molding apparatus is referred to as a cavity. That is, the injection molding apparatus performs injection molding of a product by injecting a material into the cavity in the mold attached to the injection molding apparatus and applying a pressure to the material in the cavity.

Here, one or more injection molding apparatuses in the plurality of managed devices 10 each include an extrusion unit that extrudes a material used for injection molding of a product into the cavity in the mold attached to the injection molding apparatus in the injection molding process. The extrusion unit is, for example, a screw that moves a position in a cylinder back and forth by rotating in the cylinder. Instead of the screw, the extrusion unit may be a member that moves the position in the cylinder back and forth by a hydraulic pressure, a linear actuator, or the like. The material is extruded from an injection port of the cylinder toward the cavity in the mold in response to advance of the extrusion unit in the cylinder. Hereinafter, for convenience of description, the extrusion unit in the injection molding apparatus is referred to as a screw.

Further, M detection units are attached to the one or more injection molding apparatuses in the plurality of managed devices 10. M may be any integer equal to or greater than 2. The M detection units detect a quantity controlled by the injection molding apparatus in each cycle. The quantity controlled by the injection molding apparatus in each cycle is, for example, a part or all of a position of the screw, a rotation speed of the screw, an injection speed, an injection holding pressure, a cycle time, a measurement time, an apparatus temperature, and a mold temperature, but is not limited thereto. Hereinafter, for convenience of description, the quantity detected by each of the M detection units attached to each of the one or more injection molding apparatuses in the plurality of managed devices 10 is simply referred to as a detection quantity. The injection speed is a speed at which the injection molding apparatus injects the material into the cavity in the mold by the screw. The injection holding pressure is a pressure in the mold held by the screw. The cycle time is a time required to execute one cycle. The measurement time is a time required for measurement in the cycle. The apparatus temperature is a temperature of the injection molding apparatus. The mold temperature is a temperature in the mold. Here, a detection unit that detects a certain detection quantity among the M detection units attached to a certain injection molding apparatus is, for example, a sensor that detects the detection quantity, but is not limited thereto. The M detection units may include a detection unit that detects a quality of the product. This is because the quality of the product is also controlled by the injection molding apparatus in each cycle. In this case, the detection unit is, for example, a device that includes an imaging unit capable of imaging the product to detect the quality of the product, but is not limited thereto. In this case, for example, a value of the detection quantity indicating the quality of the product detected by the detection unit is, for example, any of a plurality of predetermined values arranged in descending order of quality, but is not limited thereto.

The information processing device 20 acquires various data such as cycle data, injection molding condition data, and operation state history data from each of the one or more injection molding apparatuses in the plurality of managed devices 10. Hereinafter, in order to simplify the description, as an example, a case in which two types of data, including the cycle data and the injection molding condition data are acquired by the information processing device 20 from each of the one or more injection molding apparatuses will be described. The information processing device 20 independently acquires each of the two types of data. Therefore, in this example, timings at which these two types of data are acquired by the information processing device 20 are different from each other, except for a case in which the timings accidentally match each other, unless the timings are intentionally matched.

The information processing device 20 acquires the cycle data for each cycle from each of the one or more injection molding apparatuses in the plurality of managed devices 10. More specifically, the information processing device 20 acquires the cycle data from each of the one or more injection molding apparatuses every time each cycle ends. Hereinafter, for convenience of description, the cycle data acquired when a certain cycle ends is referred to as cycle data of the cycle. Hereinafter, for convenience of description, a cycle that ends when certain cycle data is acquired is referred to as a cycle of the cycle data.

The cycle data acquired from a certain injection molding apparatus in a certain cycle includes a plurality of types of information. Specifically, the cycle data includes a plurality of pieces of cycle-related information obtained in response to execution of the cycle by the injection molding apparatus, apparatus identification information for identifying the injection molding apparatus, and first date-and-time information indicating a date and time when the cycle data is acquired by the information processing device 20 from the injection molding apparatus. The apparatus identification information is, for example, an identifier (ID) for identifying the injection molding apparatus, and may be other information through which the injection molding apparatus can be identified, such as an Internet protocol (IP) address assigned to the injection molding apparatus. The first date-and-time information may be a time stamp or other information indicating the date and time. The cycle data may include other information in addition to the plurality of pieces of cycle-related information, the apparatus identification information, and the first date-and-time information. The apparatus identification information may be included in the cycle data as any piece of the plurality of pieces of cycle-related information. Hereinafter, as an example, a case in which the apparatus identification information is included in the cycle data as any piece of the plurality of pieces of cycle-related information will be described.

The plurality of pieces of cycle-related information included in the cycle data acquired from a certain injection molding apparatus in a certain cycle includes N pieces of actual value information in addition to the apparatus identification information for identifying the injection molding apparatus. N may be any integer equal to or greater than 2. Each of the N pieces of actual value information is information indicating one or more types of actual values for each detection quantity controlled by the injection molding apparatus. Here, each of the one or more types of actual values for a certain detection quantity indicates a feature of a waveform indicating a temporal change in a value of the detection quantity, and is, for example, a minimum value of the detection quantity, a maximum value, an average value, a variance, a standard deviation, a start value of a period in which the detection quantity is detected, or an end value of the period, but is not limited thereto. For example, an actual value of the injection speed, which is an example of the detection quantity, is a maximum injection speed which is a maximum value of the injection speed, an average injection speed which is an average value of the injection speed, or the like, but is not limited thereto. Further, for example, an actual value of the injection holding pressure, which is an example of the detection quantity, is a maximum injection holding pressure which is a maximum value of the injection holding pressure, an average injection holding pressure which is an average value of the injection holding pressure, or the like, but is not limited thereto. Further, for example, an actual value of a position of the screw, which is an example of the detection quantity, is an injection end position which is a position of the screw when the injection of the material is ended in the injection molding process of the cycle, a V-P switching position which is a position of the screw for switching from speed control for controlling the position of the screw while keeping the injection speed constant to pressure control for controlling the position of the screw while keeping the injection holding pressure constant, or the like, but is not limited thereto. An actual value for a certain detection quantity may be a value of the detection quantity itself. For example, an actual value of the cycle time, which is an example of the detection quantity, is a value of the cycle time itself. One or more types of actual values for a certain detection quantity are values controlled by the injection molding apparatus because the detection quantity is a quantity controlled by the injection molding apparatus.

Further, the plurality of pieces of cycle-related information included in the cycle data acquired from a certain injection molding apparatus in a certain cycle may include M pieces of time-series information in addition to the apparatus identification information for identifying the injection molding apparatus and the N pieces of actual value information. Each of the M pieces of time-series information is information indicating a time series of any of M detection quantities. When the M pieces of time-series information are included in the plurality of pieces of cycle-related information, the plurality of pieces of cycle-related information may not include the N pieces of actual value information. This is because the information processing device 20 can calculate the actual value indicated by each of the N pieces of actual value information from the M pieces of time-series information. In this case, the M pieces of time-series information are treated as substitutes for the N pieces of actual value information. That is, in this case, in the information processing device 20, the actual value information indicating each of one or more types of actual values for a certain detection quantity is time-series information indicating a time series of the detection quantity. Hereinafter, as an example, a case in which the plurality of pieces of cycle-related information includes M pieces of time-series information and N pieces of actual value information will be described.

The plurality of pieces of cycle-related information included in the cycle data acquired from a certain injection molding apparatus in a certain cycle may include other information. The other information is, for example, a part or all of operation state information and product quantity information, but is not limited thereto. Here, the operation state information included in the cycle data as the cycle-related information is information indicating an operation state of the injection molding apparatus. The product quantity information included in the cycle data as the cycle-related information is information indicating the number of products injection-molded by the injection molding apparatus in the cycle.

The cycle data as described above can be distinguished by a combination of the apparatus identification information and the first date-and-time information. When there is only one injection molding apparatus coupled to the information processing device 20, the cycle data may not include the apparatus identification information. This is because, in this case, the cycle data can be distinguished simply by the first date-and-time information.

When a certain piece of cycle data is acquired, the information processing device 20 stores the acquired cycle data and outputs the acquired cycle data to the server 30. Accordingly, the information processing device 20 can also store the acquired cycle data in the server 30.

Further, the information processing device 20 acquires the injection molding condition data from each of the one or more injection molding apparatuses in the plurality of managed devices 10 every time an injection molding condition is set in the injection molding apparatus.

Here, the injection molding condition data acquired from a certain injection molding apparatus is information in which a plurality of pieces of injection molding condition information each indicating the injection molding condition set in the injection molding apparatus, the apparatus identification information for identifying the injection molding apparatus, and second date-and-time information indicating a date and time when the injection molding condition data is acquired by the information processing device 20 from the injection molding apparatus are associated with one another. The apparatus identification information is, for example, an ID for identifying the injection molding apparatus, but may be other information through which the injection molding apparatus can be identified, such as an IP address assigned to the injection molding apparatus. The second date-and-time information may be a time stamp or other information indicating the date and time. The injection molding condition data may include other information in addition to the plurality of pieces of injection molding condition information, the apparatus identification information, and the second date-and-time information. The apparatus identification information may be included in the injection molding condition data as any piece of the plurality of pieces of injection molding condition information. Hereinafter, as an example, a case in which the apparatus identification information is included in the injection molding condition data as any piece of the plurality of pieces of injection molding condition information will be described.

The plurality of pieces of injection molding condition information included in the injection molding condition data acquired from a certain injection molding apparatus include M pieces of target value information in addition to the apparatus identification information for identifying the injection molding apparatus. Each of the M pieces of target value information is information indicating one or more target values in the control for each detection quantity performed by the injection molding apparatus. Therefore, the target value information indicating one or more target values for a certain detection quantity is associated with the detection quantity. A method of associating the detection quantity with the target value information may be a known method or a method to be developed in the future. A reason why the M pieces of target value information are included in the injection molding condition data as the injection molding condition information is that the injection molding apparatus controls the detection quantity such that the value of the detection quantity matches the target value of the detection quantity for each detection quantity in each cycle. Here, a reason why there are one or more target values for each detection quantity is that there may be a plurality of target values as targets to which each detection quantity is to be brought close in the control performed by the injection molding apparatus in each cycle. For example, the injection speed, which is an example of the detection quantity, changes in a plurality of stages in the injection molding process of each cycle. In such a case, there are a plurality of target values for the detection quantity. The target value information for a certain detection quantity indicates each of the one or more target values for the detection quantity. Therefore, the injection molding condition data includes, as the injection molding condition information, the target value information of the same pieces as the number of detection units attached to the injection molding apparatus. Hereinafter, for convenience of description, each of the one or more target values for a certain detection quantity is referred to as a target value corresponding to the detection quantity. Therefore, hereinafter, for convenience of description, the detection quantity is referred to as a detection quantity corresponding to the one or more target values.

The plurality of pieces of injection molding condition information included in the injection molding condition data acquired from a certain injection molding apparatus may include other information in addition to the apparatus identification information for identifying the injection molding apparatus and the M pieces of target value information. The other information is abnormality determination condition information associated with each target value set as the injection molding condition in the injection molding apparatus or the like, but is not limited thereto. Here, the abnormality determination condition information associated with a certain target value is information indicating an abnormality determination condition satisfied by a value of a detection quantity corresponding to the target value when no abnormality occurs in the value of the detection quantity in the control in which the injection molding apparatus causes the value of the detection quantity to match the target value. A method of associating the target value with the abnormality determination condition information may be a known method or a method to be developed in the future. The abnormality determination condition may be any condition as long as the condition is satisfied by the value of the detection quantity when no abnormality occurs in the value of the detection quantity in the control.

The injection molding condition data as described above can be distinguished by a combination of the apparatus identification information and the second date-and-time information. When there is only one injection molding apparatus coupled to the information processing device 20, the injection molding condition data may not include the apparatus identification information. This is because, in this case, each piece of injection molding condition data can be distinguished simply by the second date-and-time information.

When a certain piece of injection molding condition data is acquired, the information processing device 20 stores the acquired injection molding condition data and outputs the acquired injection molding condition data to the server 30. Accordingly, the information processing device 20 can also store the acquired injection molding condition data in the server 30. Here, the information processing device 20 associates the injection molding condition data indicating the injection molding conditions set in a certain injection molding apparatus in a certain cycle with the cycle data acquired from the injection molding apparatus in the cycle. Such an association method may be a known method or may be a method to be developed in the future. By such association, at least one piece of injection molding condition data is associated with each piece of cycle data. Hereinafter, as an example, a case in which one piece of injection molding condition data is associated with each piece of cycle data will be described.

In response to a request from the terminal device communicably connected to the information processing device 20, the information processing device 20 displays, on a display unit of the terminal device, various images based on cycle-related data stored in the information processing device 20. Here, the images are a graphical user interface (GUI), an icon, a window on an operating system (OS), and the like. Hereinafter, as an example, a case in which the information processing device 20 is communicably connected to the terminal device 40 as shown in FIG. 1 will be described. In the present embodiment, since processing related to login to the information processing device 20 via the terminal device 40 is known processing, a description thereof will be omitted. Hereinafter, for convenience of description, the information processing device 20 receiving an operation from the terminal device 40 via an image displayed on the terminal device 40 is simply referred to as the information processing device 20 receiving an operation. That is, hereinafter, the information processing device 20 performing certain processing in response to a received operation means the information processing device 20 performing the processing in response to an operation received from the terminal device 40 via the image displayed on the terminal device 40.

Examples of the information processing device 20 include, but are not limited to, a workstation, a desktop personal computer (PC), and a notebook PC. The information processing device 20 is communicably connected to each of the plurality of managed devices 10 by wired or wireless communication. Examples of a communication network that connects the information processing device 20 and the plurality of managed devices 10 include, but are not limited to, a Local Area Network (LAN) in a facility in which the plurality of managed devices 10 are installed. The communication network may be another communication network such as the Internet or a mobile communication network.

The server 30 stores the cycle data acquired by the information processing device 20. For example, when a certain piece of cycle data is acquired from the information processing device 20, the server 30 stores the acquired cycle data.

The server 30 stores the injection molding condition data acquired by the information processing device 20. For example, when a certain piece of injection molding condition data is acquired from the information processing device 20, the server 30 stores the acquired injection molding condition data.

In response to a request from a terminal device communicably connected to the server 30, the server 30 displays, on a display unit of the terminal device, various images based on the data stored in the server 30. The data may be cycle data, injection molding condition data, both of these two types of data, or other data. Here, the images are the GUI, the icon, the window on the OS, and the like. Hereinafter, as an example, a case in which the server 30 is communicably connected to the terminal device 40 as shown in FIG. 1 will be described. In the present embodiment, since processing related to login to the server 30 via the terminal device 40 is known processing, a description thereof will be omitted. Hereinafter, for convenience of description, the server 30 receiving an operation from the terminal device 40 via the image displayed on the terminal device 40 is simply referred to as the server 30 receiving an operation. That is, hereinafter, the server 30 performing certain processing in response to a received operation means the server 30 performing the processing in response to an operation received from the terminal device 40 via the image displayed on the terminal device 40.

As described above, in the molding management system 1, both the information processing device 20 and the server 30 display, in response to the received operation, various images based on the stored data on the display unit of the terminal device 40. Therefore, hereinafter, for convenience of description, the information processing device 20 and the server 30 are collectively referred to as an information processing device X unless it is necessary to distinguish the information processing device 20 and the server 30. Examples of the display unit include, but are not limited to, a display of the terminal device 40 and a display device communicably connected to the terminal device 40. Hereinafter, as an example, a case in which the display unit is the display of the terminal device 40 will be described. Hereinafter, for convenience of description, displaying a certain image on the display unit is referred to as displaying an image.

Here, in response to a received operation, the information processing device X displays a change tendency information display image for displaying, for each of one or more pieces of actual value information designated from among the N pieces of actual value information included in the cycle data, any one of a plurality of types of change tendency information each indicating a change tendency of an actual value indicated by a corresponding piece of actual value information and the actual value information in association with each other. There are at least three types of change tendency information. For example, when there are three types of change tendency information, each of the three types of change tendency information indicates a tendency in any one of an increase, stability, and a decrease. Further, the number of types of change tendency information may be at least five. For example, when there are five types of change tendency information, each of the five types of change tendency information indicates a tendency in any one of a rapid increase, a gentle increase, stability, a gentle decrease, and a rapid decrease. Hereinafter, a case in which there are five types of change tendency information will be described as an example. Therefore, in the following, as an example, a case in which each of the five types of change tendency information indicates a tendency in any one of the rapid increase, the gentle increase, the stability, the gentle decrease, and the rapid decrease will be described.

For example, the information processing device X displays an image P1, which is an example of the change tendency information display image, in response to a received first change tendency information display operation. More specifically, when receiving the first change tendency information display operation, the information processing device X designates one or more pieces of actual value information from among the N pieces of actual value information, and determines, for each of the designated one or more pieces of actual value information, a change tendency of an actual value indicated by a corresponding piece of actual value information is indicated by which of the five types of change tendency information. After performing such a determination, the information processing device X displays the image P1, which is an example of the change tendency information display image, according to a determination result. FIG. 2 is a diagram showing an example of the image P1. In the image P1, regions respectively associated with the five types of change tendency information are displayed. Specifically, in the image P1, five regions including a region R1 to a region R5 are displayed. The first change tendency information display operation is an example of the first operation.

Here, before describing the region R1 to the region R5, a method for the information processing device X to determine the change tendency of the actual value indicated by the actual value information is indicated by which of the five types of change tendency information will be described. Hereinafter, for convenience of description, the determination will be referred to as a tendency determination. As a method for the information processing device X to perform the tendency determination, a method of performing a tendency determination for determining a change tendency of the maximum injection speed indicated by maximum injection speed information is indicated by which of the five types of change tendency information will be described as an example. Hereinafter, for convenience of description, the tendency determination is referred to as a tendency determination X3. For example, the information processing device X performs the tendency determination X3 based on latest cycle data and past cycle data. Specifically, the information processing device X calculates a calculation value based on the maximum injection speed information included in the latest cycle data and the maximum injection speed information included in the past cycle data. The calculation value is a value used for performing the tendency determination X3. That is, the information processing device X determines the change tendency of the maximum injection speed indicated by the maximum injection speed information is indicated by which of the five types of change tendency information, according to magnitude of the calculation value and the predetermined threshold.

A value calculated as the calculation value is, for example, a difference, a change rate, a differential value, a difference from a moving average, or the like that is based on the maximum injection speed information included in the latest cycle data and the maximum injection speed information included in the past cycle data, but is not limited thereto. For example, when calculating the difference based on the maximum injection speed information included in the latest cycle data and the maximum injection speed information included in the past cycle data as the calculation value, the information processing device X calculates a difference between a maximum injection speed indicated by the maximum injection speed information included in the latest cycle data and a maximum injection speed indicated by the maximum injection speed information included in the cycle data acquired by the information processing device X immediately before the latest cycle data. Hereinafter, for convenience of description, the difference is referred to as a first calculation value. Further, for example, when calculating a change rate based on the maximum injection speed information included in the latest cycle data and the maximum injection speed information included in the past cycle data as the calculation value, the information processing device X calculates, as the change rate, a value obtained by dividing the maximum injection speed indicated by the maximum injection speed information included in the latest cycle data by the maximum injection speed indicated by the maximum injection speed information included in the cycle data acquired by the information processing device X immediately before the latest cycle data. Hereinafter, for convenience of description, the change rate is referred to as a second calculation value. Further, for example, when calculating a differential value based on the maximum injection speed information included in the latest cycle data and the maximum injection speed information included in the past cycle data as the calculation value, the information processing device X calculates, as the differential value, a value obtained by dividing a difference between the maximum injection speed indicated by the maximum injection speed information included in the latest cycle data and the maximum injection speed indicated by the maximum injection speed information included in the cycle data acquired by the information processing device X immediately before the latest cycle data, by a difference between a date and time indicated by the first date-and-time information included in the latest cycle data and a date and time indicated by the first date-and-time information included in the cycle data acquired by the information processing device X immediately before the latest cycle data. Hereinafter, for convenience of description, the differential value is referred to as a third calculation value. Further, for example, when calculating the difference from the moving average based on the maximum injection speed information included in the latest cycle data and the maximum injection speed information included in the past cycle data as the calculation value, the information processing device X calculates, as the difference from the moving average, a difference between the maximum injection speed indicated by the maximum injection speed information included in the latest cycle data and average of the maximum injection speeds indicated by the maximum injection speed information included in a predetermined number of pieces of cycle data excluding the latest cycle data among the cycle data acquired by the information processing device X most recently. Hereinafter, for convenience of description, the difference from the moving average is referred to as a fourth calculation value. The predetermined number may be any number as long as being two or more, and is, for example, five, but is not limited thereto. For example, the information processing device X performs the tendency determination X3 using at least one of the first calculation value to the fourth calculation value.

For example, when performing the tendency determination X3 using the first calculation value, the information processing device X determines which condition included in determination conditions set in advance for the first calculation value is satisfied by the first calculation value. The determination condition includes, for example, the following five conditions, including Condition 1 to Condition 5.

Condition 1: The first calculation value is a value equal to or greater than a first threshold.

Condition 2: The first calculation value is a value smaller than the first threshold and equal to or greater than a second threshold smaller than the first threshold. Condition 3: The first calculation value is a value equal to or smaller than a third threshold smaller than the second threshold, and larger than a fourth threshold smaller than the third threshold.

Condition 4: The first calculation value is a value equal to or smaller than the fourth threshold.

Condition 5: The first calculation value is a value that does not satisfy any of Condition 1 to Condition 4. That is, the first calculation value is smaller than the second threshold and exceeds the third threshold.

When the first calculation value satisfies Condition 1, the information processing device X determines that a change tendency of the maximum injection speed is a rapid increase. When the first calculation value satisfies Condition 2, the information processing device X determines that the change tendency of the maximum injection speed is a gentle increase. When the first calculation value satisfies Condition 3, the information processing device X determines that the change tendency of the maximum injection speed is a gentle decrease. When the first calculation value satisfies Condition 4, the information processing device X determines that the change tendency of the maximum injection speed is a rapid decrease. When the first calculation value satisfies Condition 5, the information processing device X determines that the change tendency of the maximum injection speed is stable.

The information processing device X receives the first threshold to the fourth threshold by receiving a predetermined operation, and stores information indicating each of the received first threshold to fourth threshold. Accordingly, the information processing device X sets the above determination conditions. The operation is an example of a second operation. Then, the information processing device X can also set such a determination condition for each of the second calculation value to the fourth calculation value by receiving a predetermined operation. Further, the information processing device X can specify at least one of the first calculation value to the fourth calculation value as the calculation value used in the tendency determination X3, by receiving the predetermined operation. That is, the information processing device X can use a part or all of the first calculation value to the fourth calculation value to perform the tendency determination X3. Hereinafter, in order to simplify the description, a case will be described in which a calculation value used for determining the change tendency of the actual value indicated by each piece of actual value information is indicated by which of the five types of change tendency information is any one of the first calculation value to the fourth calculation value.

Further, the information processing device X may be configured to specify, for each actual value, any one of the first calculation value to the fourth calculation value as the calculation value used for determining a change tendency of a corresponding actual value is indicated by which of the five types of change tendency information. That is, the calculation value used for determining a change tendency of a certain actual value is indicated by which of the five types of change tendency information may be different from the calculation value used for determining a change tendency of another actual value is indicated by which of the five types of change tendency information.

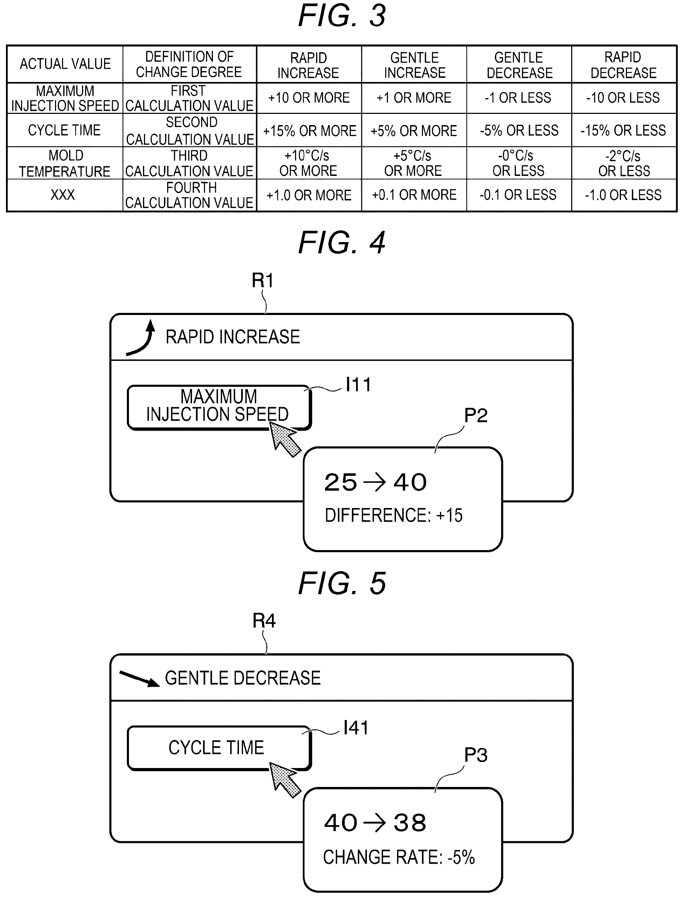

FIG. 3 is a diagram illustrating the determination condition for determining a change tendency of each actual value is indicated by which of the five types of change tendency information. In the example shown in FIG. 3, a determination condition for determining the change tendency of the maximum injection speed is indicated by which of the five types of change tendency information is a condition for the first calculation value based on the maximum injection speed, the first threshold is +10, the second threshold is +1, the third threshold is -1, and the fourth threshold is -10. In FIG. 3, a unit of the maximum injection speed is omitted. In this example, a determination condition for determining a change tendency of the cycle time is indicated by which of the five types of change tendency information is a condition for the second calculation value based on the cycle time, the first threshold is +15%, the second threshold is +5%, the third threshold is -5%, and the fourth threshold is -15%. In FIG. 3, each of the first threshold to the fourth threshold for the second calculation value is represented by a percentage. In this example, the determination condition for determining a change tendency of the mold temperature is indicated by which of the five types of change tendency information is a condition for the third calculation value based on the mold temperature, the first threshold is +10°C/s, the second threshold is +5°C/s, the third threshold is -0°C/s, and the fourth threshold is -2°C/s. In this example, a determination condition for determining a change tendency of an actual value indicated by "xxx" is indicated by which of the five types of change tendency information is a condition for the fourth calculation value based on the actual value, and the first threshold is +1.0, the second threshold is +0.1, the third threshold is -0.1, and the fourth threshold is -1.0. In FIG. 3, a unit of the actual value is omitted.

The information processing device X uses the determination condition set for each actual value as described above to perform the tendency determination of determining the change tendency of each actual value is indicated by which of the five types of change tendency information. A method of setting the determination condition in the information processing device X may be any method.

Return to FIG. 2. The region R1 is a region for displaying the actual value information indicating an actual value whose change tendency is determined to be a rapid increase. In the example shown in FIG. 2, an icon of the actual value information is displayed in the region R1. An icon of a certain piece of actual value information is an icon indicating the actual value information. Therefore, displaying the icon corresponds to displaying the actual value information. Specifically, in the region R1, an icon I11 of the maximum injection speed, which is an example of the actual value information, is displayed. Accordingly, the user can visually and quickly specify that the maximum injection speed in a most recently executed cycle has rapidly increased from a previous cycle. In this way, when the actual value information indicating an actual value whose change tendency is determined to be a rapid increase is obtained as a result of performing the tendency determination in response to the first change tendency information display operation, the information processing device X displays an icon of the obtained actual value information in the region R1. The information processing device X may be configured to, when displaying a certain piece of actual value information in the region R1, display the actual value information itself or display other information indicating the actual value information, instead of displaying an icon of the actual value information as shown in FIG. 2. The region R1 is distinguished by at least one of a mark associated with a tendency indicated by the change tendency information associated with the region R1 and a color of at least a part of the region R1. In this example, the mark is an arrow. In this example, the color is a background color of a range including the mark in the region R1. Here, a configuration of the mark may be another configuration. Further, a configuration of the color may be another configuration. In FIG. 2, a difference in the color is indicated by hatching.

The region R2 is a region for displaying the actual value information indicating an actual value whose change tendency is determined to be a rapid decrease. In the example shown in FIG. 2, an icon of the actual value information is displayed in the region R2. That is, in the region R2, an icon I21 of the maximum injection holding pressure, which is an example of the actual value information, is displayed. Accordingly, the user can visually and quickly specify that the maximum injection holding pressure in a most recently executed cycle has rapidly increased from a previous cycle. In this way, when the actual value information indicating an actual value whose change tendency is determined to be a rapid decrease is obtained as a result of performing the tendency determination, the information processing device X displays an icon of the obtained actual value information in the region R2. The information processing device X may be configured to, when displaying a certain piece of actual value information in the region R2, display the actual value information itself or display other information indicating the actual value information, instead of displaying an icon of the actual value information as shown in FIG. 2. The region R2 is distinguished by at least one of a mark associated with a tendency indicated by the change tendency information associated with the region R2 and a color of at least a part of the region R2. In this example, the mark is an arrow. In this example, the color is a background color of a range including the mark in the region R2. Here, a configuration of the mark may be another configuration. Further, a configuration of the color may be another configuration.

The region R3 is a region for displaying the actual value information indicating an actual value whose change tendency is determined to be a gentle increase. In the example shown in FIG. 2, an icon of the actual value information is displayed in the region R3. That is, in the region R3, an icon I31 of the average injection speed, which is an example of the actual value information, is displayed. Accordingly, the user can visually and quickly specify that the average injection speed in a most recently executed cycle has gently increased from a previous cycle. In this way, when the actual value information indicating an actual value whose change tendency is determined to be a gentle increase is obtained as a result of performing the tendency determination, the information processing device X displays an icon of the obtained actual value information in the region R3. The information processing device X may be configured to, when displaying a certain piece of actual value information in the region R3, display the actual value information itself or display other information indicating the actual value information, instead of displaying an icon of the actual value information as shown in FIG. 2. The region R3 is distinguished by at least one of a mark associated with a tendency indicated by the change tendency information associated with the region R3 and a color of at least a part of the region R3. In this example, the mark is an arrow. In this example, the color is a background color of a range including the mark in the region R3. Here, a configuration of the mark may be another configuration. Further, a configuration of the color may be another configuration.

The region R4 is a region for displaying the actual value information indicating an actual value whose change tendency is determined to be a gentle decrease. In the example shown in FIG. 2, an icon of the actual value information is displayed in the region R4. That is, in the region R4, an icon I41 of the cycle time which is an example of the actual value information and an icon I42 of the injection end position which is another example of the actual value information are displayed. Accordingly, the user can visually and quickly specify that each of the cycle time and the injection end position in a most recently executed cycle has gently decreased from a previous cycle. In this way, when the actual value information indicating an actual value whose change tendency is determined to be a gentle decrease is obtained as a result of performing the tendency determination, the information processing device X displays an icon of the obtained actual value information in the region R4. The information processing device X may be configured to, when displaying a certain piece of actual value information in the region R4, display the actual value information itself or display other information indicating the actual value information, instead of displaying an icon of the actual value information as shown in FIG. 2. The region R4 is distinguished by at least one of a mark associated with a tendency indicated by the change tendency information associated with the region R4 and a color of at least a part of the region R4. In this example, the mark is an arrow. In this example, the color is a background color of a range including the mark in the region R4. Here, a configuration of the mark may be another configuration. Further, a configuration of the color may be another configuration.

The region R5 is a region for displaying the actual value information indicating an actual value whose change tendency is determined to be stable. In the example shown in FIG. 2, an icon of the actual value information is displayed in the region R5. That is, in the region R5, an icon I51 of the measurement time which is an example of the actual value information, an icon I52 of the V-P switching position which is another example of the actual value information, an icon I53 of the apparatus temperature which is another example of the actual value information, and an icon I54 of the mold temperature which is another example of the actual value information are displayed. Accordingly, the user can visually and quickly specify that each of the measurement time, the V-P switching position, the apparatus temperature and the mold temperature in a most recently executed cycle is stable from a previous cycle. In this way, when the actual value information indicating an actual value whose change tendency is determined to be stable is obtained as a result of performing the tendency determination, the information processing device X displays an icon of the obtained actual value information in the region R5. The information processing device X may be configured to, when displaying a certain piece of actual value information in the region R5, display the actual value information itself or display other information indicating the actual value information, instead of displaying an icon of the actual value information as shown in FIG. 2. The region R5 is distinguished by at least one of a mark associated with a tendency indicated by the change tendency information associated with the region R5 and a color of at least a part of the region R5. In this example, the mark is an arrow. In this example, the color is a background color of a range including the mark in the region R5. Here, a configuration of the mark may be another configuration. Further, a configuration of the color may be another configuration.

Here, when a selection operation is performed on any of the icons displayed in each of the region R1 to the region R5, the information processing device X displays detailed information including the calculation value used for determining a change tendency of an actual value indicated by the actual value information of the icon on which the selection operation is performed is indicated by which of the five types of change tendency information. Here, the actual value information of the icon is the actual value information indicated by the icon.

For example, FIG. 4 is a diagram showing an example of a state in which detailed information is displayed when a selection operation is performed on the icon I11 displayed in the region R1. In the example shown in FIG. 4, the selection operation on the icon I11 is a mouseover to the icon I11, but is not limited thereto. In this example, the information processing device X displays detailed information P2 in response to the selection operation. In this example, the detailed information P2 is displayed in the image P1, but may be displayed in an image other than the image P1 instead. Further, in this example, the detailed information P2 is detailed information displayed in response to the selection operation on the icon I11 of the maximum injection speed information. Therefore, in the detailed information P2, the first calculation value which is a difference based on the maximum injection speed indicated by the maximum injection speed information included in the latest cycle data and the maximum injection speed indicated by the maximum injection speed information included in the cycle data acquired by the information processing device X immediately before the latest cycle data is displayed as "difference: +15". A display mode of the first calculation value in the detailed information P2 may be another display mode instead. In the detailed information P2, in addition to the first calculation value, "25 -> 40" is displayed as information indicating that the maximum injection speed indicated by the maximum injection speed information included in the cycle data acquired by the information processing device X immediately before the latest cycle data has changed to the maximum injection speed indicated by the maximum injection speed information included in the latest cycle data. Accordingly, the information processing device X can make it possible to easily specify the calculation value used for performing the tendency determination for an actual value indicated by the actual value information of the icon I11.

Further, FIG. 5 is a diagram showing an example of a state in which detailed information is displayed when a selection operation is performed on the icon I41 displayed in the region R4. In the example shown in FIG. 5, a selection operation on the icon I41 is a mouseover to the icon I41, but is not limited thereto. In this example, the information processing device X displays detailed information P3 in response to the selection operation. In this example, the detailed information P3 is displayed in the image P1, but may be displayed in an image other than the image P1 instead. Further, in this example, the detailed information P3 is detailed information displayed in response to the selection operation on the icon I41 of the cycle time information. Therefore, in the detailed information P3, the second calculation value that is a change rate based on a cycle time indicated by the cycle time information included in the latest cycle data and a cycle time indicated by the cycle time information included in the cycle data acquired by the information processing device X immediately before the latest cycle data is displayed as "change rate: -5%". A display mode of the second calculation value in the detailed information P3 may be another display mode instead. In the detailed information P3, in addition to the second calculation value, "40 -> 38" is displayed as information indicating that the cycle time indicated by the cycle time information included in the cycle data acquired by the information processing device X immediately before the latest cycle data has changed to the cycle time indicated by the cycle time information included in the latest cycle data. Accordingly, the information processing device X can make it possible to easily specify the calculation value used for performing the tendency determination for an actual value indicated by the actual value information of the icon I41.

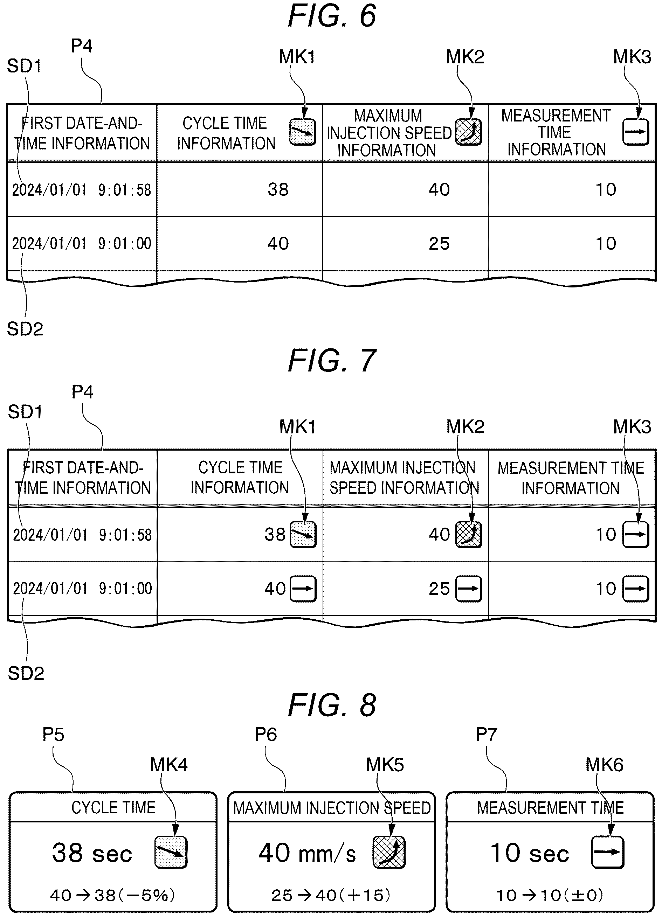

Further, for example, the information processing device X designates one or more pieces of actual value information from among the N pieces of actual value information included in the latest cycle data in response to a received second change tendency information display operation, and performs the tendency determination for an actual value indicated by each of the designated one or more pieces of actual value information. That is, the information processing device X performs the tendency determination in response to the second change tendency information display operation. The second change tendency information display operation is an example of the first operation. Then, the information processing device X displays an image P4 shown in FIG. 6 according to a result of the tendency determination. FIG. 6 is a diagram showing an example of the image P4. The image P4 is an actual value information list display image for displaying, for each piece of cycle data, a list of at least a part of the N pieces of actual value information included in the cycle data, and is another example of the change tendency information display image. In the example shown in FIG. 6, in the image P4, a list of records indicating two pieces of cycle data including cycle data SD1 and cycle data SD2 is displayed. Accordingly, in the image P4, for each of the two pieces of cycle data including the cycle data SD1 and the cycle data SD2, a list of three pieces of actual value information, including the cycle time information, the maximum injection speed information, and the measurement time information among the N pieces of actual value information included in a corresponding piece of cycle data is displayed. In this example, the records indicating each piece of cycle data include the first date-and-time information in addition to the three pieces of actual value information. More specifically, a record indicating the cycle data SD1 includes "2024/01/01 9:01:58", which is the first date-and-time information indicating 9:01:58 on January 1, 2024, "38", which is the cycle time information indicating 30 seconds, "40", which is the maximum injection speed information indicating 40 mm/s, and "10", which is the measurement time information indicating 10 seconds. Further, a record indicating the cycle data SD2 includes "2024/01/01 9:01:00" which is the first date-and-time information indicating 9:01:00 on January 1, 2024, "40" which is the cycle time information indicating 40 seconds, "25" which is the maximum injection speed information indicating 25 mm/s, and "10" which is the measurement time information indicating 10 seconds.

Here, in the example shown in FIG. 6, above an uppermost record, that is, the record indicating the cycle data SD1, labels indicating fields for respectively displaying the first date-and-time information, the cycle time information, the maximum injection speed information, and the measurement time information in each record are displayed. For example, a label indicating a field for displaying the first date-and-time information in each record is a character string "first date-and-time information". For example, a label indicating a field for displaying the cycle time information in each record is a character string "cycle time information". The information processing device X displays the change tendency information next to each of these labels, thereby displaying, for each of the three pieces of actual value information included in the cycle data SD1 which is the latest cycle data, the change tendency information indicating a change tendency of an actual value indicated by a corresponding piece of actual value information in association with the actual value information. In other words, the information processing device X displays the change tendency information next to each of these labels, thereby displaying, for each of the three pieces of actual value information included in the cycle data SD1 which is the latest cycle data, the change tendency information indicating a change tendency of the actual value indicated by the corresponding piece of actual value information in association with the actual value information. For example, next to the "cycle time information" which is one of the labels displayed above the record indicating the cycle data SD1, information MK1 is displayed as the change tendency information indicating a change tendency of the cycle time indicated by the cycle time information included in the cycle data SD1. In this example, the information MK1 is an image distinguishable by a mark associated with a tendency indicated by the change tendency information and a color associated with the tendency. The information MK1 may be an image distinguishable by either the mark or the color. The information MK1 may be other information indicating the tendency. Further, in this example, next to the "maximum injection speed information" which is one of the labels displayed above the record indicating the cycle data SD1, information MK2 is displayed as the change tendency information indicating a change tendency of the maximum injection speed indicated by the maximum injection speed information included in the cycle data SD1. In this example, the information MK2 is an image distinguishable by a mark associated with a tendency indicated by the change tendency information and a color associated with the tendency. The information MK2 may be an image distinguishable by either the mark or the color. The information MK2 may be other information indicating the tendency. Further, in this example, next to the "measurement time information" which is one of the labels displayed above the record indicating the cycle data SD1, information MK3 is displayed as the change tendency information indicating a change tendency of the measurement time indicated by the measurement time information included in the cycle data SD1. In this example, the information MK3 is an image distinguishable by a mark associated with a tendency indicated by the change tendency information and a color associated with the tendency. The information MK3 may be an image distinguishable by either the mark or the color. The information MK3 may be other information indicating the tendency.

As described above, each of the information MK1 to the information MK3 is the change tendency information indicating the change tendency of the actual value indicated by the actual value information included in the latest cycle data. Therefore, in the example shown in FIG. 6, in the image P4, the information processing device X displays, for each of at least a part of the actual value information included in the latest cycle data, the change tendency information indicating a change tendency of an actual value indicated by a corresponding piece of actual value information in association with the actual value information via the label of the actual value information. Accordingly, the information processing device X can make it possible to quickly read the change tendency of the actual value indicated by each piece of actual value information via the image P4.

The information processing device X may be configured to display, for each piece of cycle data displayed in the image P4 and for each piece of actual value information included in a corresponding piece of cycle data, the change tendency information indicating the change tendency of the actual value indicated by the corresponding piece of actual value information in association with the actual value information. In this case, the information processing device X selects each piece of cycle data displayed in the image P4 as first cycle data one by one in response to the received second change tendency information display operation, and selects, as second cycle data, cycle data indicated by each of records one record below a record of the cycle data selected as the first cycle data. Then, the information processing device X performs, for each piece of first cycle data, the tendency determination based on the actual value information included in the first cycle data and the actual value information included in each piece of second cycle data. Accordingly, the information processing device X can display, for each piece of actual value information included in the individual pieces of cycle data displayed in the image P4, the change tendency information indicating a change tendency of an actual value indicated by a corresponding piece of actual value information in association with the actual value information. In this case, the information processing device X can make it possible to compare a change tendency of a past actual value and a change tendency of a latest actual value, and can more efficiently manage the cycle. For example, FIG. 7 is a diagram showing an example of the image P4 in which change tendency information is displayed, for each piece of cycle data, in association with actual value information included in a corresponding piece of cycle data. In the example shown in FIG. 7, the change tendency information is displayed next to all the actual value information displayed in the image P4. That is, in this example, the information processing device X can make it possible to compare a change tendency of the actual value in a cycle of the cycle data SD2 and a change tendency of the actual value in a cycle of the cycle data SD1, and can more efficiently manage the cycle.

As described above, the information processing device X displays the change tendency information display image in response to a received operation. Accordingly, the information processing device X can make it possible to quickly read the change tendency of the actual value indicated by each piece of actual value information. Further, for example, when the change tendency of each actual value is stable, the user can determine that the production of the product in the cycle is stable. This means that when a defect occurs in the production of the product in the cycle, a cause of the defect in the production can be estimated by specifying an actual value whose change tendency is not stable. Then, since the information processing device X can make it possible for the user to quickly specify the actual value whose change tendency is not stable, the user can efficiently manage the cycle. Further, in condition setting work for finding the injection molding condition appropriate for the production, the information processing device X can make it possible for the user to easily specify an influence on each actual value caused by a change in the injection molding condition, as the change tendency of a corresponding actual value. This leads to improvement in efficiency of the condition setting work, and is useful. Further, since the information processing device X can set, for each actual value indicated by each piece of actual value information, the determination condition for the calculation value used for performing the tendency determination for a corresponding actual value, and can customize the determination condition according to ease of change of each actual value, and as a result, the change tendency of each of various actual values having various ease of change can be accurately determined.

The image displayed as the change tendency information display image may include another image instead of at least one of the image P1 and the image P4 or in addition to the image P1 and the image P4.

For example, as shown in FIG. 8, the information processing device X may be configured to display, in response to a received third change tendency display operation and for each of one or more pieces of actual value information designated by the third change tendency display operation among the N pieces of actual value information included in the cycle data, a card-type image including the change tendency information indicating a change tendency of an actual value indicated by a corresponding piece of actual value information. FIG. 8 is a diagram illustrating the card-type image displayed by the information processing device X for each piece of actual value information in response to the third change tendency display operation. The third change tendency display operation is an example of the first operation.

In the example shown in FIG. 8, three pieces of actual value information including the cycle time information, the maximum injection speed information, and the measurement time information are designated as the one or more pieces of actual value information designated by the third change tendency display operation. Each of an image P5 to an image P7 shown in FIG. 8 is an example of the card-type image displayed by the information processing device X in response to the third change tendency display operation, and is also an example of the change tendency information display image.

Specifically, the image P5 is an image associated with the cycle time information, and is an example of a card-type image including the change tendency information indicating the change tendency of the cycle time indicated by the cycle time information. Therefore, information MK4 is displayed in the image P5 as the change tendency information. The information MK4 is an image distinguishable by a mark associated with a tendency indicated by the change tendency information and a color associated with the tendency. The information MK4 may be an image distinguishable by either the mark or the color. The information MK4 may be other information indicating the tendency. By displaying the information MK4 in the image P5, the cycle time information associated with the image P5 is associated with the change tendency information displayed as the information MK4. Therefore, the information processing device X can display, in response to the third change tendency display operation, the change tendency information indicating the change tendency of the actual value indicated by the actual value information in association with the actual value information. In the image P5, "38 sec" which is a value of the cycle time is displayed. In the image P5, "40 -> 38" is displayed as information indicating that the cycle time indicated by the cycle time information included in the cycle data acquired by the information processing device X immediately before the latest cycle data has changed to the cycle time indicated by the cycle time information included in the latest cycle data. Further, in the image P5, the second calculation value that is a change rate based on the cycle time indicated by the cycle time information included in the latest cycle data and the cycle time indicated by the cycle time information included in the cycle data acquired by the information processing device X immediately before the latest cycle data is displayed as "(-5%)". Accordingly, the information processing device X can make it possible to quickly specify the change tendency of the cycle time indicated by the cycle time information associated with the image P5, and can easily specify the calculation value used for performing the tendency determination for the cycle time indicated by the cycle time information associated with the image P5. This allows the user to selectively specify the change tendency of the actual value indicated by each piece of actual value information, and is useful.

Further, the image P6 is an image associated with the maximum injection speed information, and is an example of a card-type image including the change tendency information indicating the change tendency of the maximum injection speed indicated by the maximum injection speed information. Therefore, information MK5 is displayed in the image P6 as the change tendency information. The information MK5 is an image distinguishable by a mark associated with a tendency indicated by the change tendency information and a color associated with the tendency. The information MK5 may be an image distinguishable by either the mark or the color. The information MK5 may be other information indicating the tendency. By displaying the information MK5 in the image P6, the maximum injection speed information associated with the image P6 is associated with the change tendency information displayed as the information MK5. Therefore, the information processing device X can display, in response to the third change tendency display operation, the change tendency information indicating the change tendency of the actual value indicated by the actual value information in association with the actual value information. Further, in the image P6, "40 mm/s" which is a value of the maximum injection speed is displayed. In the image P6, "25 -> 40" is displayed as information indicating that the maximum injection speed indicated by the maximum injection speed information included in the cycle data acquired by the information processing device X immediately before the latest cycle data has changed to the maximum injection speed indicated by the maximum injection speed information included in the latest cycle data. Further, in the image P6, the first calculation value which is a difference based on the maximum injection speed indicated by the maximum injection speed information included in the latest cycle data and the maximum injection speed indicated by the maximum injection speed information included in the cycle data acquired by the information processing device X immediately before the latest cycle data is displayed as "(+15)". Accordingly, the information processing device X can make it possible to quickly specify the change tendency of the maximum injection speed indicated by the maximum injection speed information associated with the image P6, and can easily specify the calculation value used for performing the tendency determination for the maximum injection speed indicated by the maximum injection speed information associated with the image P6. This allows the user to selectively specify the change tendency of the actual value indicated by each piece of actual value information, and is useful.

Further, the image P7 is an image associated with the measurement time information, and is an example of a card-type image including the change tendency information indicating a change tendency of the measurement time indicated by the measurement time information. Therefore, information MK6 is displayed in the image P7 as the change tendency information. The information MK6 is an image distinguishable by a mark associated with a tendency indicated by the change tendency information and a color associated with the tendency. The information MK6 may be an image distinguishable by either the mark or the color. The information MK6 may be other information indicating the tendency. By displaying the information MK6 in the image P7, the measurement time information associated with the image P7 is associated with the change tendency information displayed as the information MK6. Therefore, the information processing device X can display, in response to the third change tendency display operation, the change tendency information indicating the change tendency of the actual value indicated by the actual value information in association with the actual value information. In the image P7, "10 sec" which is a value of the measurement time is displayed. In the image P7, "10 -> 10" is displayed as information indicating that the measurement time indicated by the measurement time information included in the cycle data acquired by the information processing device X immediately before the latest cycle data has changed to the measurement time indicated by the measurement time information included in the latest cycle data. Further, in the image P7, the first calculation value which is a difference based on the measurement time indicated by the measurement time information included in the latest cycle data and the measurement time indicated by the measurement time information included in the cycle data acquired by the information processing device X immediately before the latest cycle data is displayed as "(±0)". Accordingly, the information processing device X can make it possible to quickly specify the change tendency of the measurement time indicated by the measurement time information associated with the image P7, and can easily specify the calculation value used for performing the tendency determination for the measurement time indicated by the measurement time information associated with the image P7. This allows the user to selectively specify the change tendency of the actual value indicated by each piece of actual value information, and is useful.

### Hardware Configuration of Information Processing Device X

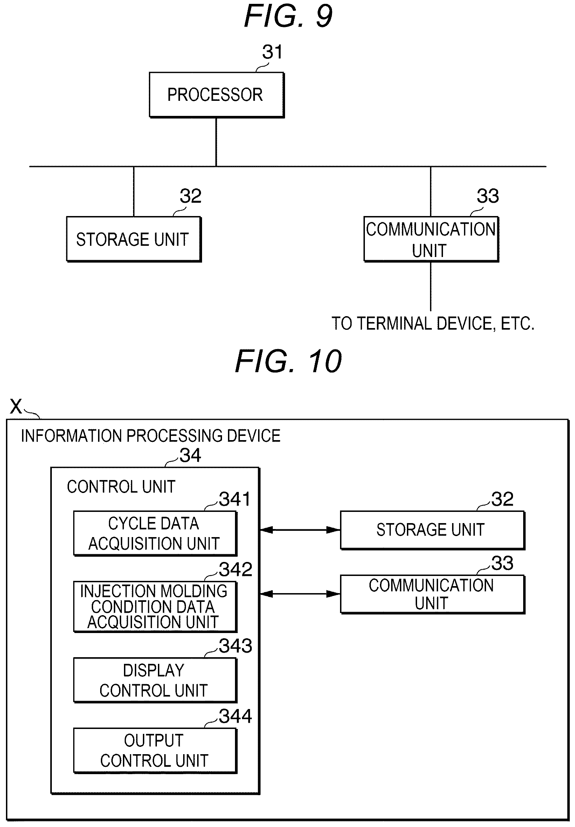

Here, the information processing device 20 and the server 30 may have the same hardware configuration or may have different hardware configurations. Hereinafter, as an example, a case in which the information processing device 20 and the server 30 have the same hardware configuration will be described. In other words, in one example, the information processing device X has a hardware configuration as shown in FIG. 9. FIG. 9 is a diagram showing an example of the hardware configuration of the information processing device X.

The information processing device X includes, for example, a processor 31, a storage unit 32, and a communication unit 33. These component elements are communicably connected to one another via a bus. The information processing device X communicates with other devices via the communication unit 33. For example, when the information processing device X is the information processing device 20, the other devices are the injection molding apparatus, the server 30, the terminal device 40, and the like. For example, when the information processing device X is the server 30, the other devices are the information processing device 20, the terminal device 40, and the like.

The processor 31 is, for example, a central processing unit (CPU). Instead of the CPU, the processor 31 may be another processor such as a field programmable gate array (FPGA). The processor 31 executes various programs stored in the storage unit 32.

The storage unit 32 is, for example, a storage device including a hard disk drive (HDD), a solid-state drive (SSD), an electrically erasable programmable read-only memory (EEPROM), a read-only memory (ROM), and a random access memory (RAM). Instead of being built in the information processing device X, the storage unit 32 may be an external storage device connected to a digital input and output port such as a universal serial bus (USB). The storage unit 32 stores various types of information, various images, and various programs to be processed by the information processing device X. That is, the various types of information stored in the information processing device X are stored in the storage unit 32.

The communication unit 33 is a communication device including, for example, a digital input and output port such as a USB, an Ethernet (registered trademark) port, and an antenna for wireless communication.

### Functional Configuration of Information Processing Device X

Here, the information processing device 20 and the server 30 may have the same functional configuration or may have different functional configurations. Hereinafter, as an example, a case in which the information processing device 20 and the server 30 have the same functional configuration will be described. In other words, in this example, the information processing device X has a functional configuration as shown in FIG. 10. FIG. 10 is a diagram showing an example of the functional configuration of the information processing device X.

The information processing device X includes the storage unit 32, the communication unit 33, and a control unit 34.

The control unit 34 controls the entire information processing device X. The control unit 34 includes at least a cycle data acquisition unit 341, an injection molding condition data acquisition unit 342, a display control unit 343, and an output control unit 344. These functional units provided in the control unit 34 are implemented by, for example, the processor 31 executing the various programs stored in the storage unit 32. A part or all of the functional units may be hardware functional units such as a large scale integration (LSI) or an application specific integrated circuit (ASIC).

The cycle data acquisition unit 341 acquires the cycle data for each cycle of each injection molding apparatus from a device communicably connected to the information processing device X. Examples of the device include the injection molding apparatus and the information processing device 20.

The injection molding condition data acquisition unit 342 acquires the injection molding condition data from a device communicably connected to the information processing device X every time the injection molding condition is set in each injection molding apparatus. Examples of the device include the injection molding apparatus and the information processing device 20.

The display control unit 343 generates various images in response to the received operation. For example, the display control unit 343 generates the image P1, the image P4 to the image P7, and the like. The display control unit 343 transmits the generated images to the terminal device 40 and displays the images on the terminal device 40.

The output control unit 344 outputs various types of data to another device in response to the received operation.

### Processing Performed by Information Processing Device X in Response to Received Operation

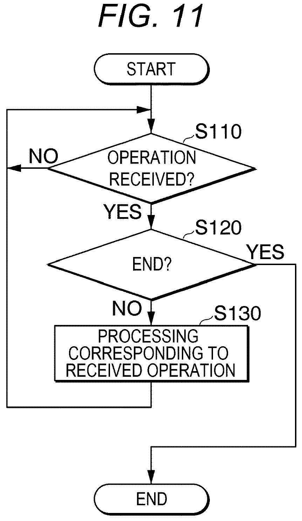

Referring to FIG. 11, processing performed by the information processing device X in response to each operation described above will be described. FIG. 11 is a diagram showing an example of a flow of the processing performed by the information processing device X in response to a received operation. Hereinafter, as an example, a case will be described in which the information processing device X is in a state in which various operations from the user can be received via the terminal device 40 at a timing before processing in step S110 shown in FIG. 11 is performed. Hereinafter, as an example, a case in which a plurality of pieces of cycle data and a plurality of pieces of injection molding condition data are already stored in the information processing device X at the timing will be described.

The control unit 34 waits until an operation is received via the terminal device 40 (step S110). In FIG. 11, the processing in step S110 is indicated by "operation received?".

When it is determined that the operation has been received via the terminal device 40 (step S110: YES), the control unit 34 determines whether the received operation is an operation for ending the processing in the flowchart shown in FIG. 11 (step S120). The determination processing may be performed by the control unit 34 in step S120 by a known method or by a method to be developed in the future. In FIG. 11, the processing in step S120 is indicated by "end?".

When it is determined that the operation received in step S110 is an operation for ending the processing in the flowchart shown in FIG. 11 (step S120: YES), for example, the control unit 34 ends the processing in the flowchart shown in FIG. 11.

On the other hand, when it is determined that the operation received in step S110 is not an operation for ending the processing in the flowchart shown in FIG. 11 (step S120: NO), the control unit 34 performs processing corresponding to the received operation (step S130). The processing includes various types of processing described as the processing performed by the information processing device X in the present embodiment. Here, since the processing performed by the control unit 34 in step S130 is already described with reference to FIGS. 2 to 8, a detailed description of the processing will be omitted.

After the processing in step S130 is performed, the control unit 34 transitions to step S110 and waits again until an operation is received via the terminal device 40.

By the above processing, in response to a received operation, the information processing device X displays a change tendency information display image for displaying, for each of one or more pieces of actual value information designated from among the N pieces of actual value information included in the cycle data, any one of the five types of change tendency information each indicating a change tendency of an actual value indicated by a corresponding piece of actual value information and the actual value information in association with each other. Accordingly, the information processing device X can make it possible to quickly read the change tendency of the actual value indicated by each piece of actual value information.

The molding management system 1 described above may include the terminal device 40. The molding management system 1 described above may include an injection molding apparatus such as the injection molding apparatus 11.

The contents described above may be combined in any manner.

### Appendix

[1] A molding management system for managing production of a product in a production process including an injection molding process of the product performed by an injection molding apparatus, the molding management system including:
   an information processing device communicably connected to a terminal device, in which
   the information processing device
      acquires cycle data from the injection molding apparatus for each cycle of performing injection molding, the cycle data including, for each of N types of actual values controlled by the injection molding apparatus, actual value information indicating a corresponding type of actual value as cycle-related information obtained in response to execution of the cycle by the injection molding apparatus and including first date-and-time information indicating a date and time when the cycle data is acquired from the injection molding apparatus, and
      in response to a first operation that is received, displays, on a display unit, an change tendency information display image for displaying, for each of one or more pieces of actual value information designated among the N pieces of actual value information included in the cycle data, any one of a plurality of types of change tendency information indicating a change tendency of the actual value indicated by a corresponding piece of the actual value information, and the actual value information in association with each other, N being an integer of two or more.
[2] The molding management system according to [1], in which
   regions associated respectively with the plurality of types of change tendency information are displayed in the change tendency information display image, and
   in response to the first operation, the information processing device determines, for each of the one or more pieces of actual value information, the change tendency of the actual value indicated by a corresponding piece of the actual value information is indicated by which of the plurality of types of change tendency information, and displays, for each of the regions associated respectively with the plurality of types of change tendency information, the actual value information determined to indicate the actual value changed in the tendency indicated by the change tendency information associated with a corresponding one of the regions among the one or more pieces of actual value information, in the region.
[3] The molding management system according to [2], in which
   the information processing device displays, for each of the regions associated respectively with the plurality of types of change tendency information, an icon of the actual value information determined to indicate the actual value changed in the tendency indicated by the change tendency information associated with the corresponding region among the one or more pieces of actual value information, in the region.
[4] The molding management system according to [3], in which
   the information processing device
   calculates, for each of the one or more pieces of actual value information, a calculation value used for determining the change tendency of the actual value indicated by a corresponding piece of the actual value information is indicated by which of the plurality of types of change tendency information, and determines, based on the calculation value, the change tendency of the actual value indicated by the actual value information is indicated by which of the plurality of types of change tendency information, and
   when a selection operation is performed on the icon, displays, on the display unit, information including the calculation value used for determining the change tendency of the actual value indicated by the actual value information of the icon is indicated by which of the plurality of types of change tendency information.
[5] The molding management system according to any one of [2] to [4], in which
   on the change tendency information display image, each of the regions associated respectively with the plurality of types of change tendency information is distinguished by at least one of a mark associated with the tendency indicated by the change tendency information associated with a corresponding one of the regions and a color of at least a part of the region.
[6] The molding management system according to any one of [1] to [5], in which
   the number of types of the change tendency information is at least three, and
   each of the three types of change tendency information indicates a tendency of any one of an increase, stability, and a decrease.
[7] The molding management system according to any one of [1] to [5], in which
   the number of types of the change tendency information is at least five, and
   each of the five types of change tendency information indicates a tendency of any one of a rapid increase, a gentle increase, stability, a gentle decrease, and a rapid decrease.
[8] The molding management system according to any one of [1] to [7], in which
   in response to the first operation, the information processing device determines, for each of the one or more pieces of actual value information, the change tendency of the actual value indicated by a corresponding piece of the actual value information is indicated by which of the plurality of types of change tendency information, and displays, as the change tendency information display image, an actual value information list display image for displaying, on the display unit for each piece of the cycle data, a list of at least a part of the N pieces of actual value information included in a corresponding piece of the cycle data, and
   for each piece of actual value information included in at least a part of the list displayed in the actual value information list display image, the change tendency information indicating the change tendency of the actual value indicated by a corresponding piece of the actual value information is displayed in association.
[9] The molding management system according to [8], in which
   each of the plurality of types of change tendency information is an image distinguishable by at least one of a mark associated with the tendency indicated by a corresponding type of the change tendency information and a color associated with the tendency indicated by the change tendency information.
[10] The molding management system according to any one of [1] to [9], in which
   the information processing device calculates, for each of the one or more pieces of actual value information, a calculation value used for determining the change tendency of the actual value indicated by a corresponding piece of the actual value information is indicated by which of the plurality of types of change tendency information, and determines, based on the calculation value, the change tendency of the actual value indicated by the actual value information is indicated by which of the plurality of types of change tendency information.
[11] The molding management system according to [10], in which
   the calculation value is any one of a difference in the actual value indicated by the actual value information, a change rate of the actual value indicated by the actual value information, a differential value of the actual value indicated by the actual value information, and a difference from a moving average of the actual value indicated by the actual value information.
[12] The molding management system according to [10] or [11], in which
   in response to a second operation that is received, the information processing device sets, for each of the one or more pieces of actual value information, a determination condition for the calculation value used for determining the change tendency of the actual value indicated by a corresponding piece of the actual value information is indicated by which of the plurality of types of change tendency information.
[13] The molding management system according to any one of [1] to [12], further including:
   the terminal device.
[14] The molding management system according to any one of [1] to [13], further including:
   the injection molding apparatus.

The embodiment of the present disclosure is described in detail above with reference to the drawings. However, a specific configuration is not limited to the embodiment and may be, for example, changed, replaced, or deleted without departing from the gist of the present disclosure.

A program for implementing a function of any component in the device described above may be recorded in a computer-readable recording medium and the program may be read and executed by a computer system. Here, the device is, for example, the injection molding apparatus 11, the information processing device 20, the server 30, or the terminal device 40. Here, the "computer system" referred to here includes an operating system (OS) and hardware such as peripheral devices. The "computer-readable recording medium" refers to a portable medium such as a flexible disc, a magneto-optical disc, a ROM, or a compact disk (CD) ROM or a storage device such as a hard disk built in the computer system. Further, the "computer-readable recording medium" includes a medium that stores the program for a certain period of time, such as a volatile memory inside the computer system serving as a server or a client when the program is transmitted via a network such as the Internet or a communication line such as a telephone line.

The program may be transmitted from a computer system in which the program is stored in a storage device or the like to another computer system via a transmission medium or by a transmission wave in the transmission medium. Here, the "transmission medium" for transmitting the program refers to a medium having a function of transmitting information like a network such as the Internet or a communication line such as a telephone line.

The program may be a program for implementing a part of the functions described above. Further, the program may be a so-called differential file or differential program that can implement the functions described above in combination with a program already recorded in the computer system.

## Claims

1. A molding management system for managing production of a product in a production process including an injection molding process of the product performed by an injection molding apparatus, the molding management system comprising:
an information processing device communicably connected to a terminal device, wherein
the information processing device
acquires cycle data from the injection molding apparatus for each cycle of performing injection molding, the cycle data including, for each of N types of actual values controlled by the injection molding apparatus, actual value information indicating a corresponding type of actual value as cycle-related information obtained in response to execution of the cycle by the injection molding apparatus and including first date-and-time information indicating a date and time when the cycle data is acquired from the injection molding apparatus, and
in response to a first operation that is received, displays, on a display unit, an change tendency information display image for displaying, for each of one or more pieces of actual value information designated among the N pieces of actual value information included in the cycle data, any one of a plurality of types of change tendency information indicating a change tendency of the actual value indicated by a corresponding piece of the actual value information, and the actual value information in association with each other, N being an integer of two or more.

2. The molding management system according to claim 1, wherein
regions associated respectively with the plurality of types of change tendency information are displayed in the change tendency information display image, and
in response to the first operation, the information processing device determines, for each of the one or more pieces of actual value information, the change tendency of the actual value indicated by a corresponding piece of the actual value information is indicated by which of the plurality of types of change tendency information, and displays, for each of the regions associated respectively with the plurality of types of change tendency information, the actual value information determined to indicate the actual value changed in the tendency indicated by the change tendency information associated with a corresponding one of the regions among the one or more pieces of actual value information, in the region.

3. The molding management system according to claim 2, wherein
the information processing device displays, for each of the regions associated respectively with the plurality of types of change tendency information, an icon of the actual value information determined to indicate the actual value changed in the tendency indicated by the change tendency information associated with the corresponding region among the one or more pieces of actual value information, in the region.

4. The molding management system according to claim 3, wherein
the information processing device
calculates, for each of the one or more pieces of actual value information, a calculation value used for determining the change tendency of the actual value indicated by a corresponding piece of the actual value information is indicated by which of the plurality of types of change tendency information, and determines, based on the calculation value, the change tendency of the actual value indicated by the actual value information is indicated by which of the plurality of types of change tendency information, and
when a selection operation is performed on the icon, displays, on the display unit, information including the calculation value used for determining the change tendency of the actual value indicated by the actual value information of the icon is indicated by which of the plurality of types of change tendency information.

5. The molding management system according to claim 2, wherein
on the change tendency information display image, each of the regions associated respectively with the plurality of types of change tendency information is distinguished by at least one of a mark associated with the tendency indicated by the change tendency information associated with a corresponding one of the regions and a color of at least a part of the region.

6. The molding management system according to claim 1, wherein
the number of types of the change tendency information is at least three, and
each of the three types of change tendency information indicates a tendency of any one of an increase, stability, and a decrease.

7. The molding management system according to claim 1, wherein
the number of types of the change tendency information is at least five, and
each of the five types of change tendency information indicates a tendency of any one of a rapid increase, a gentle increase, stability, a gentle decrease, and a rapid decrease.

8. The molding management system according to claim 1, wherein
in response to the first operation, the information processing device determines, for each of the one or more pieces of actual value information, the change tendency of the actual value indicated by a corresponding piece of the actual value information is indicated by which of the plurality of types of change tendency information, and displays, as the change tendency information display image, an actual value information list display image for displaying, on the display unit for each piece of the cycle data, a list of at least a part of the N pieces of actual value information included in a corresponding piece of the cycle data, and
for each piece of actual value information included in at least a part of the list displayed in the actual value information list display image, the change tendency information indicating the change tendency of the actual value indicated by a corresponding piece of the actual value information is displayed in association.

9. The molding management system according to claim 8, wherein
each of the plurality of types of change tendency information is an image distinguishable by at least one of a mark associated with the tendency indicated by a corresponding type of the change tendency information and a color associated with the tendency indicated by the change tendency information.

10. The molding management system according to claim 1, wherein
the information processing device calculates, for each of the one or more pieces of actual value information, a calculation value used for determining the change tendency of the actual value indicated by a corresponding piece of the actual value information is indicated by which of the plurality of types of change tendency information, and determines, based on the calculation value, the change tendency of the actual value indicated by the actual value information is indicated by which of the plurality of types of change tendency information.

11. The molding management system according to claim 10, wherein
the calculation value is any one of a difference in the actual value indicated by the actual value information, a change rate of the actual value indicated by the actual value information, a differential value of the actual value indicated by the actual value information, and a difference from a moving average of the actual value indicated by the actual value information.

12. The molding management system according to claim 10, wherein
in response to a second operation that is received, the information processing device sets, for each of the one or more pieces of actual value information, a determination condition for the calculation value used for determining the change tendency of the actual value indicated by a corresponding piece of the actual value information is indicated by which of the plurality of types of change tendency information.

13. The molding management system according to claim 1, further comprising:
the terminal device.

14. The molding management system according to claim 1, further comprising:
the injection molding apparatus.
